(19) **Europäisches Patentamt / European Patent Office / Office européen des brevets**

(11) **EP 1 743 192 B1**

(12) # FASCICULE DE BREVET EUROPEEN

(45) Date de publication et mention de la délivrance du brevet:
**11.05.2016 Bulletin 2016/19**

(21) Numéro de dépôt: **05747061.9**

(22) Date de dépôt: **21.04.2005**

(51) Int Cl.:
**G01T 1/24** (2006.01)   **G01T 1/17** (2006.01)

(86) Numéro de dépôt international:
**PCT/FR2005/050270**

(87) Numéro de publication internationale:
**WO 2005/114257 (01.12.2005 Gazette 2005/48)**

(54) **PROCEDE DE CORRECTION DES SPECTRES BI-PARAMETRIQUES**

VERFAHREN ZUR KORREKTUR VON BIPARAMETRISCHEN SPEKTREN

METHOD FOR CORRECTING BIPARAMETRIC SPECTRA

(84) Etats contractants désignés:
**AT BE BG CH CY CZ DE DK EE ES FI FR GB GR HU IE IS IT LI LT LU MC NL PL PT RO SE SI SK TR**

(30) Priorité: **03.05.2004 FR 0404763**

(43) Date de publication de la demande:
**17.01.2007 Bulletin 2007/03**

(73) Titulaires:
- **Commissariat à l'Énergie Atomique et aux Énergies Alternatives 75015 Paris (FR)**
- **COMPAGNIE GENERALE DES MATIERES NUCLEAIRES 78140 Velizy Villacoublay (FR)**

(72) Inventeur: **MONTEMONT, Guillaume F-38000 GRENOBLE (FR)**

(74) Mandataire: **Ahner, Philippe et al BREVALEX 95, rue d'Amsterdam 75378 Paris Cedex 8 (FR)**

(56) Documents cités:
**FR-A1- 2 738 693     FR-A1- 2 738 919
FR-A1- 2 790 560**

**Description**

**DOMAINE TECHNIQUE ET ART ANTERIEUR**

L'invention concerne le domaine du traitement de signaux en particulier en spectrométrie X ou gamma.

Cette technique met en oeuvre un détecteur semi-conducteur, qui comporte souvent des défauts de collection des porteurs de charge.

En spectrométrie de rayonnement incident, on cherche à déterminer la quantité de porteurs de charges créés par l'interaction de photon X ou gamma.

A cette fin, on applique un champ électrique au matériau semi-conducteur à l'aide d'électrodes de manière à drainer ces charges et induire un signal électrique d'amplitude proportionnel à leur quantité. Malheureusement, la mesure de cette quantité de porteurs est rendue difficile par les propriétés de transport imparfaites du semi-conducteur : en effet, une partie des charges ne parviennent pas jusqu'aux électrodes. C'est le problème de collection incomplète.

Une des techniques proposées pour corriger cette collection incomplète est d'utiliser, en plus de la mesure d'amplitude, la mesure d'un ou plusieurs autres paramètres sur la forme du signal électrique obtenu (par exemple son temps de montée) permettant en particulier de remonter au lieu d'interaction du photon dans le milieu semi-conducteur. Grâce à un étalonnage de l'efficacité de collecte en fonction du lieu d'interaction, on peut alors déterminer la charge réellement déposée par le photon.

Un exemple de ce type de procédé est décrit dans la demande de brevet français FR - 2 738 919 ou dans le document FR - 2 738 693.

Ce type de procédé de correction consiste à mesurer l'amplitude et le temps de montée du signal électrique obtenu en sortie d'un préamplificateur de charge relié aux électrodes du dispositif, puis à enregistrer simultanément les deux grandeurs. Les données sont stockées dans un histogramme à deux dimensions, appelé spectre bi-paramétrique.

On effectue alors un étalonnage de la relation amplitude/temps sur deux énergies de référence E1 et E2, connues comme étant présentes dans une source radioactive d'étalonnage.

On obtient ainsi deux courbes d'étalonnage amplitude/temps $A_1(T)$ et $A_2(T)$ que l'on utilise ensuite pour corriger la perte de charge pour tout le spectre et estimer les énergies équivalentes aux différents couples amplitude/temps :

$$E = \text{Gain}(T)A + \text{Décalage}(T),$$

Avec

$$\text{Gain}(T) = (E_2 - E_1)/(A_2(T) - A_1(T)),$$

$$\text{Décalage}(T) = E_1 - \text{Gain}(T)A_1(T)$$

Tous les couples amplitude/temps correspondant aux différentes interactions sont corrigés par cette technique que nous désignons par « homothétie ».

Toutefois, ce procédé dégrade trop l'information contenue dans un spectre bi-paramétrique.

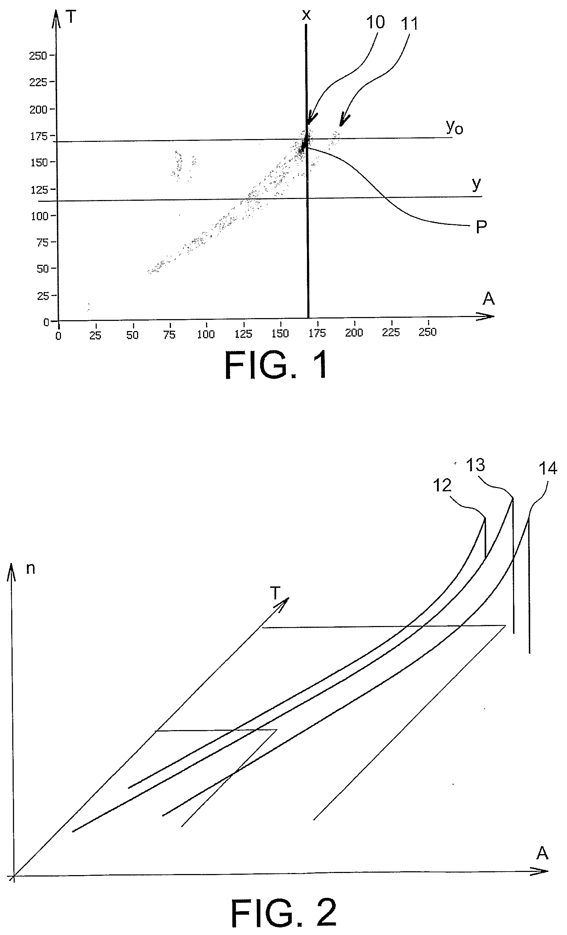

Ainsi, la figure 1 représente un spectre bi-paramétrique brut, avec le temps de montée T en ordonnée et l'amplitude A en abscisse.

Ce type de spectre contient deux autres informations : l'énergie (comme expliqué dans le document FR 2 738 919) et le nombre de photons n.

Ainsi les deux nuages de points 10 et 11 se chevauchant sur la figure 1, correspondent à deux énergies différentes Ea et Eb.

En fait la représentation complète est une représentation en trois dimensions formée d'un ensemble de courbes 3D, comme celles référencées 13, 14 et 15 sur la figure 2, chaque courbe donnant, pour une énergie donnée, le nombre de photons n en fonction du temps de montée T et de l'amplitude A du signal.

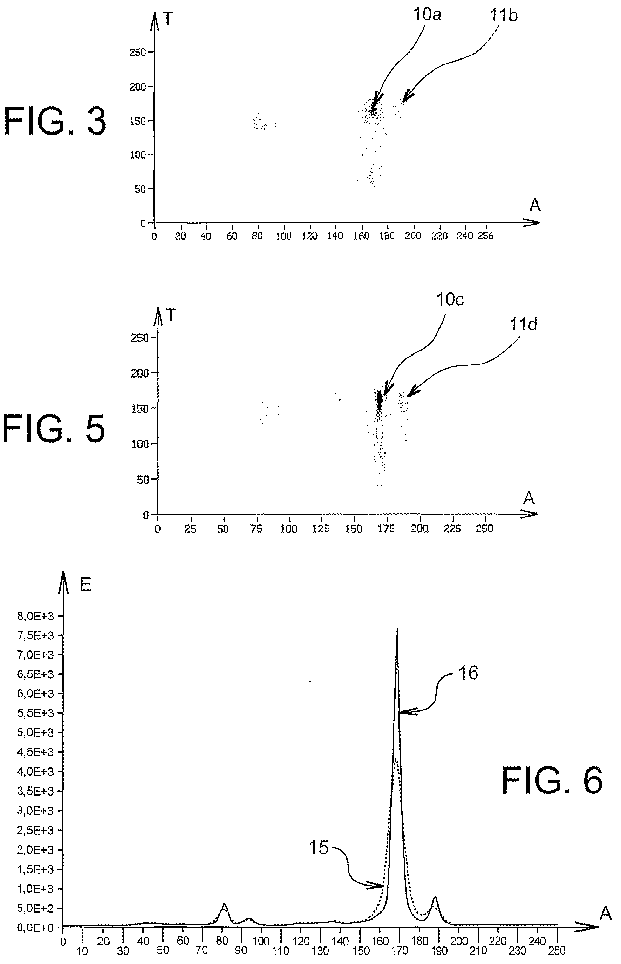

La figure 3 représente le spectre bi-paramétrique corrigé par la méthode dite « par homothétie ». Grâce à cette correction par homothétie, les nuages de points 10 et 11 dont les amplitudes se chevauchent, sont transformés en deux autres nuages de points 10a et 11b distincts en amplitude correspondant auxdites deux énergies différentes Ea et Eb.

Le spectre bi-paramétrique corrigé contient cependant une information dégradée : on voit que, par rapport à la représentation de la figure 1, les signaux relatifs aux nuages de points 10a et 11b sont élargis par rapport aux signaux relatifs aux nuages de points 10 et 11.

Si les nuages de points 10 et 11 de la figure 1 avaient été encore plus proches, les deux nuages de points 10a et 11b de la figure 3 pourraient se chevaucher.

La correction par homothétie n'est donc pas entièrement satisfaisante. Le spectre énergétique résultant de la méthode par homothétie n'utilise donc en fait pas toute l'information présente dans le spectre bi-paramétrique.

Cela se traduit par l'impossibilité d'exploiter correctement les impulsions de faibles amplitudes, bien qu'elles soient détectées et identifiables à un pic énergétique donné.

Il se pose donc le problème de trouver une méthode et un dispositif de correction améliorée permettant une exploitation plus globale de l'information contenue dans un spectre bi-paramétrique.

## EXPOSÉ DE L'INVENTION

Selon l'invention, l'estimation de l'énergie correspondant à une impulsion ne peut se faire indépendamment des autres.

L'invention a tout d'abord pour objet un procédé de traitement d'un spectre bi-paramétrique comportant :

- la sélection d'un paramètre de profil du spectre, et d'une fonction initiale de correction,
- pour tout profil sélectionné selon ce paramètre, effectuer une opération de correction par multiplication de ce profil sélectionné par une fonction de correction, égale à la somme d'au moins une partie des profils déjà corrigés.

Ledit spectre bi-paramétrique peut être par exemple de type (temps - amplitude). Ledit paramètre de profil peut être alors le temps de montée du spectre, les profils pouvant alors être sélectionnés selon un ordre décroissant des temps de montée ou, mieux encore, par ordre décroissant de précision ou de résolution.

Le signal auquel s'applique le procédé selon l'invention peut être un signal ou un spectre bi-paramétrique déjà traité ou corrigé par homothétie.

La fonction initiale de correction est par exemple une distribution uniforme.

Ladite opération de correction peut comprendre en outre une étape de normalisation.

Ainsi, selon une première variante, ladite opération de correction peut comporter en outre une division par une intégrale de ladite fonction de correction.

Selon une seconde variante, ladite opération de correction peut comporter une autre multiplication par un rapport d'une intégrale dudit profil sélectionné sur une autre intégrale du profil sélectionné multiplié par ladite fonction de correction.

Selon une troisième variante pour laquelle ledit spectre est représentatif d'une distribution d'un nombre de photons variant suivant différents canaux en temps de montée et différents canaux en amplitude, ladite distribution étant déterminée à une incertitude de mesure près, ladite opération de correction peut comprendre en outre une étape de normalisation localisée comportant :

- une division dudit profil sélectionné par une convolution de ladite fonction de correction et de ladite fonction d'incertitude.
- une étape de redistribution canal d'amplitude par canal d'amplitude de la répartition du nombre de photons dans ledit profil sélectionné à l'aide d'une fonction dite d'incertitude dépendante de ladite incertitude de mesure.

Ladite fonction d'incertitude peut être par exemple de type gaussienne dont l'écart type dépend de ladite incertitude de mesure.

La présente invention concerne également un dispositif de traitement d'un spectre bi-paramétrique, par exemple de type (temps - amplitude) comportant :

- des moyens pour sélectionner un paramètre de profil du spectre, et une fonction initiale de correction,
- des moyens pour, pour tout profil sélectionné selon ce paramètre, effectuer une opération de correction par multiplication de ce profil sélectionné par une fonction de correction, égale à la somme d'au moins une partie des profils déjà corrigés et normalisés.

Ce dispositif de traitement peut selon un mode de réalisation particulier, comprendre en outre des moyens pour classer tous les profils du spectre selon un critère de qualité de résolution, ainsi que des moyens pour sélectionner les profils du spectre selon un ordre croissant ou décroissant de qualité de résolution.

Le dispositif de traitement suivant l'invention peut également éventuellement comprendre des moyens pour corriger le spectre par homothétie.

L'invention concerne en outre un dispositif de traitement d'un spectre bi-paramétrique comportant :

- des moyens pour sélectionner un paramètre de profil du spectre et une fonction initiale de correction,
- des moyens programmés pour mettre en oeuvre un procédé de traitement de spectre suivant l'invention et tel que décrit précédemment.

Un dispositif d'imagerie médicale comportant : un détecteur ou une matrice de détecteurs à semi-conducteur, des moyens d'acquisition d'un spectre bi-paramétrique, un dispositif de traitement du spectre bi-paramétrique selon l'invention, des moyens d'affichage d'informations relatives au traitement du spectre bi-paramétrique, est également prévu dans le cadre de la présente invention.

## BRÈVE DESCRIPTION DES DESSINS

- Les figures 1 - 3 représentent des spectres bi-paramétriques,
- la figure 4 représente schématiquement les étapes d'un procédé selon l'invention,
- les figures 5 et 6 représentent des exemples de spectres obtenus par un procédé selon l'invention,
- les figures 7 et 8 représentent des dispositifs pour mettre en oeuvre un procédé selon l'invention.

## EXPOSÉ DÉTAILLÉ DE MODES DE RÉALISATION PARTICULIERS

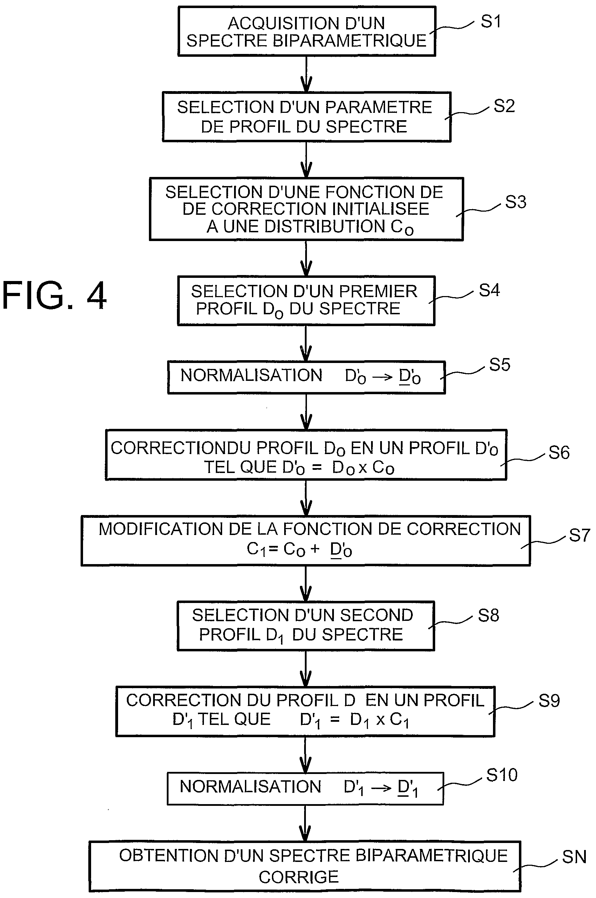

Un exemple de procédé selon l'invention va être décrit en liaison avec l'organigramme de la figure 4.

Dans une première étape (S1), on suppose un spectre bi-paramétrique obtenu.

Comme cela a été expliqué auparavant dans la présentation de l'art antérieur, ledit spectre bi-paramétrique obtenu contient notamment une information relative à une distribution d'un nombre de photons n suivant différents canaux d'amplitude et différents canaux de temps de montée. Un nombre de photons pour un canal de temps de montée donné et pour un canal d'amplitude donné du spectre correspond à une fréquence ou un nombre d'occurrence d'un couple (temps de montée, amplitude d'un signal). Ainsi, pour désigner un nombre de photons pour un canal d'amplitude et un canal de temps de montée du spectre donnés, on utilisera le terme « nombre de coups » tout au long de la présente description.

Le spectre obtenu peut être par exemple un spectre tel que celui représenté en figure 1, ou un spectre corrigé par homothétie, comme illustré en figure 3.

Puis (étape S2), on sélectionne un paramètre de profil donné parmi les paramètres du spectre tels que par exemple un paramètre de temps de montée, ainsi qu'une fonction de correction (étape S3), initialisée par une distribution que l'on notera $C_0$, par exemple une distribution de type uniforme.

Les étapes S2 et S3 peuvent être réalisées simultanément ou dans un ordre quelconque.

On effectue alors un traitement itératif, lors duquel, selon une étape S4, une première distribution ou un premier profil noté $D_0$ du spectre bi-paramétrique est sélectionné à paramètre de profil constant. Cette sélection peut être par exemple celle d'un profil du spectre à temps de montée constant, ce qui correspondra alors à une sélection pour un temps de montée donné de la distribution du nombre de photons n suivant les différents canaux d'amplitude.

La sélection d'un tel profil peut répondre à un ou plusieurs critères et peut être représentée par exemple par le tracé d'une ligne horizontale y orthogonale à l'axe des ordonnées sur la figure 1.

Sur le spectre bi-paramétrique, un profil à temps de montée constant correspond à un ensemble de valeurs numérisées discrètes. C'est au cours de la numérisation des mesures aboutissant au spectre bi-paramétrique qu'un choix de précision est fait. Cette précision correspond au pas de la numérisation qui peut être choisi notamment en fonction de l'incertitude de mesure des temps de montées.

De préférence, on sélectionne un profil comportant un pic d'intensité élevée, par exemple le profil comportant le pic d'intensité la plus élevée tel que défini sur la figure 1 par la ligne horizontale $y_0$ passant par le pic P (dont l'intensité est proportionnelle au niveau de gris sur l'image du spectre).

La sélection peut être réalisée selon un critère de résolution du profil. Par exemple, on peut sélectionner parmi tous les profils du spectre à temps de montée constant, le profil ayant la résolution la plus élevée. On peut ainsi commencer le traitement en partant des canaux en temps de montée contenant le pic ou les pics les plus « précis ». Pour permettre une sélection de ce type, un classement, selon un critère de résolution, des différents profils du spectre, chaque profil étant à temps de montée constant, peut avoir été effectué préalablement à l'étape S4, par exemple juste après l'étape S2 du procédé. La résolution pourra être calculée en fonction notamment de la largeur à mi-hauteur des pics contenus dans chaque profil.

Ensuite, le premier profil $D_0$ est corrigé au moins par une multiplication par la fonction de correction initialisée à la distribution $C_0$ (étape S6),

On obtient alors un profil au moins partiellement corrigé noté $D'_0$ :

$$D'_0 = D_0 \times C_0$$

La correction peut être complétée d'une étape que l'on nommera de « normalisation » (étape S5), qui peut être effectuée avant, en même temps, ou après l'étape S6 de multiplication. Le profil corrigé et normalisé sera noté $\underline{D}'_0$.

Selon une première variante de mise en oeuvre, cette normalisation peut consister à diviser le premier profil au moins partiellement corrigé $D'_0$ par l'intégrale sur l'ensemble des canaux en amplitude (que l'on notera $\sum C_0$) de la fonction de correction $C_0$, tel que :

$$\underline{D}_0' = D_0 \times \frac{C_0}{\sum C_0} \quad (1)$$

Dans l'expression (1) précédente comme dans tout le reste de la présente description, '$\sum$' représente une somme sur l'ensemble des canaux.

Selon une seconde variante améliorée par rapport à la première, l'étape S6 de normalisation peut consister à multiplier le premier profil corrigé $D'_0$ par un rapport (noté $\dfrac{\sum D_0}{\sum D_0 \times C_0}$) de l'intégrale sur l'ensemble des canaux en amplitude du premier profil $D_0$ (notée $\sum D_0$) et de l'intégrale sur l'ensemble des canaux en amplitude du premier profil corrigé (notée $\sum D_0 \times C_0$), tel que :

$$\underline{D}_0' = D_0 \times C_0 \times \frac{\sum D_0}{\sum D_0 \times C_0}$$

Le décompte du nombre de photons contenu dans ce premier profil corrigé et normalisé sera ainsi le même que celui du profil $D_0$ avant correction.

Puis, après normalisation, la fonction de correction initialisée à $C_0$ est modifiée (étape S7). Cette dernière est incrémentée en lui ajoutant le premier profil corrigé. Une nouvelle fonction de correction notée $C_1$ est ainsi formée et telle que :

$$C_1 = C_0 + \underline{D}'_0$$

Cette fonction de correction $C_1$ pourra servir de fonction de correction pour un autre profil à temps de montée constant et permet de tenir compte d'informations relatives au premier profil corrigé.

On effectue ensuite un traitement du type de celui réalisé lors des étapes S4 à S7, sur un autre profil à temps de montée constant du spectre bi-paramétrique. Ainsi, on sélectionne (étape S8) tout d'abord un deuxième profil $D_1$ à temps de montée constant par exemple en allant dans le sens des temps de montée décroissants à partir du premier profil, ou par exemple selon un critère de résolution, par exemple en choisissant parmi tous les profils à temps de montée constant du spectre restant à traiter, le profil ayant la résolution la plus élevée.

Le deuxième profil est alors multiplié par la fonction de correction modifiée $C_1$ (étape S9), constituée de la somme de la fonction de correction initiale $C_0$ et du premier profil corrigé $\underline{D}'_0$. On obtient ainsi un deuxième profil au moins partiellement corrigé $D'_1$ :

$$D'_1 = D_1 \times C_1$$

$$D'_1 = D_1 \times [C_0 + \underline{D}'_0]$$

De même que pour le traitement du premier profil, une deuxième étape de normalisation du deuxième profil, et du type de celle effectuée pour le premier profil (étape S10) peut être réalisée, éventuellement en même temps que l'étape S9 de multiplication.

Dans le cas où l'on a utilisé la première variante de normalisation à l'étape S6, cette deuxième normalisation peut consister à diviser le second profil au moins partiellement corrigé, par l'intégrale sur l'ensemble des canaux en amplitude de la nouvelle fonction de correction $C_1$ :

$$\underline{D}'_1 = D'_1 / \sum C_1$$

$$\underline{D}'_1 = (D_1 \times C_1) / \sum C_1$$

$$\underline{D}'_1 = (D_1 \times [C_0 + \underline{D}'_0]) / \sum [C_0 + \underline{D}'_0]$$

Dans le cas où l'on a utilisé la seconde variante de normalisation à l'étape S6, cette deuxième normalisation peut consister à multiplier le second profil corrigé D'$_1$ par un rapport de l'intégrale sur l'ensemble des canaux en amplitude du second profil D$_1$ (notée $\sum D_1$) et de l'intégrale sur l'ensemble des canaux en amplitude du premier profil corrigé (notée $\sum D_1 \times C_1$) tel que :

$$\underline{D}'_1 = D_1 \times \frac{\sum D_1}{\sum D_1 \times C_1}$$

$$\underline{D}'_1 = D_1 \times C_1 \times \frac{\sum D_1}{\sum D_1 \times C_1} \quad \text{avec } C_1 = [C_0 + \underline{D}'_0]$$

$$\underline{D}'_1 = D_1 \times [C_0 + \underline{D}'_0] \times \frac{\sum D_1}{\sum D_1 \times [C_0 + \underline{D}'_0]}$$

L'opération qui vient d'être décrite est renouvelée pour tous les profils successivement choisis. Chaque profil D$_k$ est ainsi tout d'abord multiplié par une fonction de correction C$_k$ tenant compte des profils corrigés précédemment puis normalisés, tel que :

D'$_k$ = D$_k$ x C$_k$, pour la multiplication avec
C$_k$ = C$_{k-1}$ + D'$_{k-1}$ et D'$_{k-1}$ un profil corrigé et normalisé juste avant le profil D$_k$, et

$$\underline{D}_k' = D_k \times \frac{C_k}{\sum C_k} \quad \text{pour la normalisation, dans le cas où l'on a suivi la première variante de normalisation, ou}$$

$$\underline{D}'_k = D_k \times C_k \times \frac{\sum D_k}{\sum D_k \times C_k} \quad \text{dans un cas où l'on a suivi la seconde variante de normalisation.}$$

On traite ainsi l'ensemble des profils à temps de montée constant du spectre bi-paramétrique. Après traitement de tous les profils, le spectre bi-paramétrique final est corrigé (étape S$_N$).

La fonction de correction obtenue à la fin du procédé sera notée C$_N$. La fonction C$_N$-C$_0$ c'est-à-dire, la fonction de correction finale C$_N$ à laquelle on retranche la distribution initiale C$_0$, correspond quant à elle à un spectre énergétique que l'on a construit itérativement pour tous les temps de montée à partir du spectre bi-paramétrique corrigé.

Le procédé suivant l'invention peut être combiné à un procédé de traitement par homothétie tel que décrit précédemment dans la présentation de l'art antérieur.

Dans le cas d'un spectre bi-paramétrique préalablement traité par homothétie, on peut procéder de la manière suivante :

On procède à l'acquisition de deux paramètres (typiquement amplitude A et temps de montée T), puis on réalise un étalonnage sur deux pics de référence permettant de calibrer un Gain(T) et un décalage (T) .

Ensuite, grâce à l'un des pics de référence, on classe les différents canaux en temps de montée du spectre, typiquement du plus précis (celui dont le profil à la meilleur résolution) au moins précis. On procède ensuite en construisant itérativement un spectre énergétique.

Pour chaque temps de montée T du spectre bi-paramétrique, on traite les différents canaux d'amplitude selon la méthode suivante :

1) Pour un temps de montée donné, on corrige chaque canal d'amplitude selon la loi E=gain(T)A+Décalage(T), c'est-à-dire que les coups du canal sont redistribués selon une loi (de type appropriée, par exemple gaussienne de largeur Gain(T) x 1 canal) centrée sur E. Ainsi, un profil $D_k$ du spectre pour ledit temps de montée donné est corrigé de manière homothétique.

2) On prend en compte la connaissance antérieure en multipliant ce profil ou cette distribution $D_k$ par une fonction de correction $C_k$ obtenue grâce aux distributions corrigées précédemment.

3) On normalise la distribution résultante $D'_k$ pour lui affecter le nombre de coups égal au nombre de coups de canal à corriger.

4) On modifie la fonction de correction $C_k$ en lui ajoutant la distribution corrigée et normalisée $\underline{D}'_k$.

5) On répète le processus pour traiter l'ensemble des points du spectre bi-paramétrique.

A la fin du traitement, on obtient une fonction de correction finale notée $C_N$. Une fonction notée $C_N-C_0$ égale à la fonction de correction finale à laquelle on retranche la fonction de correction initiale, correspond audit spectre énergétique obtenu par cumul sur tous les temps de montée.

Notons que la fonction de correction peut être initialisée grâce à une distribution uniforme de manière à indiquer l'absence de connaissance initiale.

Le décompte du nombre de photons ou nombre de coups initialement inclus dans la fonction de correction correspond à une quantité d'information statistiquement fiable et donc significative.

Quel que soit le spectre bi-paramètrique de départ, la chronologie de traitement des différents temps de montée peut être choisie au préalable.

On préférera partir des points du spectre les plus précis. Pour cela, les différents points du spectre bi-paramètrique sont classés par ordre de précision. Ce classement n'a pas nécessairement de corrélation avec la chronologie arithmétique des valeurs de temps de montée (autrement dit les points classés ne sont pas obligatoirement juxtaposés sur le spectre). Le spectre référencé 16 correspond à une somme sur tous les temps de montée du spectre bi-paramétrique corrigé à l'aide du procédé suivant l'invention et correspond à une représentation graphique de la fonction de correction $C_N$ obtenue à la fin du procédé suivant l'invention à laquelle on a retranché la fonction de correction initiale $C_0$.

On peut appliquer ce principe de façon moins stricte, en sachant que les profils dans des régions du spectre correspondant à des grandes amplitudes de signal sont généralement plus précis que les profils dans des régions du spectre correspondant à des faibles amplitudes, et ainsi choisir une chronologie de traitement selon un ordre décroissant des temps de montée.

Pour d'autres raisons, on pourra choisir un ordre croissant ou aléatoire ou prédéterminé quelconque.

Un autre exemple de procédé selon l'invention met en oeuvre une normalisation locale au cours du traitement du spectre bi-paramétrique grâce à une fonction d'incertitude que l'on notera G.

Dans cet exemple de procédé, on corrige chaque profil à temps de montée T constant du spectre bi-paramétrique par exemple dans un ordre suivant un classement préétabli selon un critère de résolution.

Pour un profil $D_k$ donné à temps de montée constant sélectionné (représenté par exemple par le tracé d'une ligne horizontale orthogonale à l'axe des ordonnées sur la figure 1), on traite ce profil, canal d'amplitude après canal d'amplitude, sur l'ensemble des différents canaux d'amplitude selon la méthode suivante :

Pour un canal d'amplitude donné i (représenté par exemple par une ligne verticale discontinue orthogonale à l'axe des abscisses sur la figure 1) :

1) On sélectionne le nombre de coups ou de photons contenu dans le profil $D_k$ pour ledit canal d'amplitude donné i, et que l'on notera $D_k(i)$.

2) On redistribue ce nombre selon ladite fonction d'incertitude, qui est centrée sur ledit canal d'amplitude donné i et que l'on notera alors $G_i$.

Cette fonction d'incertitude peut être par exemple une distribution gaussienne dont l'écart type dépend de l'incertitude sur les mesures qui ont permis d'obtenir le spectre bi-paramétrique.

3) Le résultat de cette redistribution est multiplié par une fonction de correction $C_k$, et normalisé. La fonction de correction $C_k$ peut être obtenue, comme cela a été décrit précédemment, par sommation des distributions à temps de montée constant traitées et corrigées précédemment. Quant à la normalisation, cette dernière peut être une division par une intégrale, sur l'ensemble des canaux en amplitude, du produit de la fonction d'incertitude centrée $G_i$ par la fonction de correction $C_k$, intégrale que l'on notera $\sum G_i \times C_k$, i correspondant audit canal d'amplitude donné.

Cette normalisation effectuée de manière localisée permettra de conserver le nombre de coups $D_k(i)$ dans le spectre final corrigé. Le processus qui vient d'être décrit est alors répété pour l'ensemble de tous les canaux en amplitude.

On réalise alors une somme sur l'ensemble des canaux afin d'obtenir un profil corrigé et normalisé que l'on notera $\underline{D}'_k$.

$$\underline{D}_k'(u) = \sum_i D(i) \times \frac{Gi(u)C(u)}{\sum_v Gi(v)C(v)}$$

Pour résumer le traitement qui vient d'être effectué, on redistribue le nombre de coups de chaque canal i, dans une région proche du canal i, selon une distribution $G_i \times C_k$, qui correspond à une sélection locale de la fonction de correction autour de chaque canal i. On empêche ainsi de redistribuer les coups de chaque canal dans des régions du spectre éloignées de celle dans laquelle ils se trouvaient initialement et où la présence de ces coups aurait peu ou pas de signification physique.

Le traitement d'un profil $D_k$ du spectre peut encore s'écrire : $\underline{D}'_k = \left( \frac{D_k}{C_k * G} * G \right) \times C_k$ où '*' désigne une convolution.

Ce traitement étant prévu pour chacun des profils à temps de montée constant, on incrémente ensuite la fonction de correction $C_k$, en lui ajoutant le profil qui vient d'être corrigé.

On répète ensuite le traitement pour un autre profil à temps de montée constant. Lorsque l'ensemble des profils à temps de montée constant du spectre bi-paramétrique sont corrigées, on obtient, à la fin du traitement, une fonction de correction finale notée $C_N$. Une fonction notée $C_N$-$C_0$ égale à la fonction de correction finale à laquelle on retranche la fonction de correction initiale, correspond audit spectre énergétique obtenu par cumul sur tous les temps de montée.

La figure 5 représente un spectre bi-paramétrique corrigé par un procédé selon l'invention, du type de celui de la figure 3 précédemment décrit, qui résultait d'un traitement par homothétie. Sur cette figure on voit que l'on obtient deux nuages de points distincts 10c et 11d, plus fins et mieux séparées que sur la figure 3.

La figure 6 représente deux spectres énergétiques référencés 15 et 16, obtenus à partir de projections dans la direction de l'axe des ordonnées respectivement d'un premier spectre bi-paramétrique du type de celui sur la figure 3 et d'un autre spectre bi-paramétrique du type de celui illustré sur la figure 5. La résolution du spectre 16, résultant d'un procédé de traitement suivant l'invention est meilleure que celle du spectre référencé 15 et permet de mieux distinguer les deux énergies $E_a$ et $E_b$.

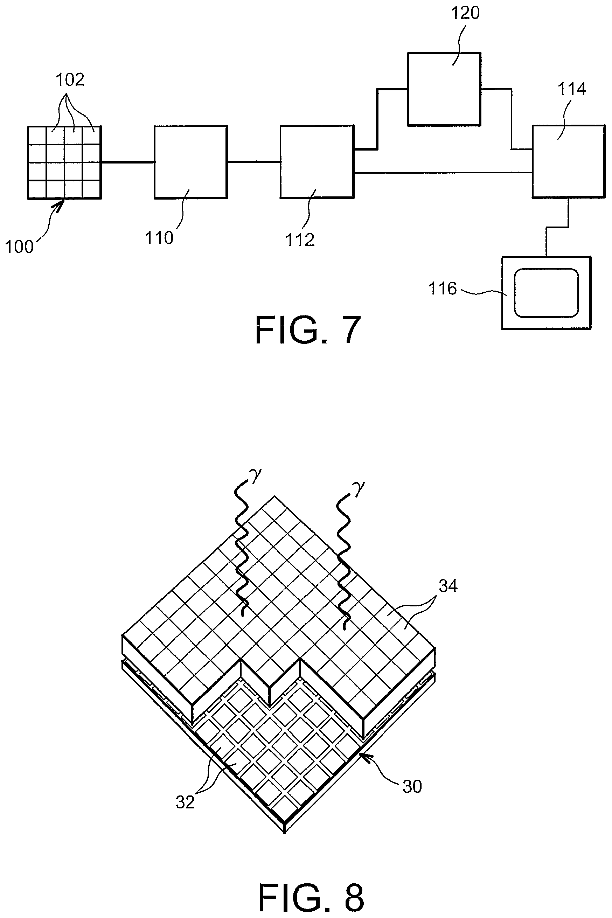

Le procédé selon l'invention peut être mis en oeuvre à l'aide d'un dispositif tel qu'illustré sur la figure 7.

La référence 100 sur la figure 7 désigne une matrice d'éléments de détection 102 à semi-conducteur, agencées dans un plan de détection.

La figure 8 montre l'exemple d'une structure d'un détecteur à semi-conducteur. Celui-ci comprend une plate-forme 30 équipée de circuits électroniques 32 intégrés et sur laquelle est montée une pluralité d'éléments de détection 34.

Les éléments de détection 34 se présentent chacun sous la forme d'un bloc de semi-conducteur avec deux faces parallèles opposées sur lesquelles sont prévues des électrodes. Un champ électrique appliqué sur les électrodes permet de faire migrer les porteurs de charges, c'est-à-dire les électrons et les trous formés par l'interaction du rayonnement avec le semi-conducteur. Les électrodes, non représentées sur la figure, sont également prévues pour recevoir les charges et les transférer vers les circuits intégrés de la plate-forme 30 pour la formation d'un signal de détection.

Les signaux délivrés par les éléments de détection sont dirigés vers un premier circuit intégré par exemple un circuit intégré spécifique (ASIC) 110. Ce circuit comprend des voies d'amplification des signaux pour chaque élément de détection et des moyens de multiplexage des voies.

Un deuxième circuit 112 est prévu pour déterminer l'amplitude et le temps de montée de chaque signal et pour mettre en forme des données correspondant à ces grandeurs, ainsi que des données représentant les coordonnées des événements. Les coordonnées des événements sont liées à la position de l'élément de détection correspondant dans le plan de détection. Un circuit tel que le circuit 112 est par exemple décrit dans le document FR - 2 738 919.

Le procédé de traitement suivant l'invention peut s'appliquer à des spectres bi-paramétrique ayant pour paramètre de forme un paramètre différent du temps de montée, par exemple un paramètre de rapport de signal de cathode sur signal d'anode provenant desdites électrodes.

Les données sont dirigées vers un ordinateur 114 destiné à effectuer les calculs et traitements liés à la phase de calibrage et destiné à construire une image (par exemple médicale) à partir des données lors de la phase d'acquisition. L'image est affichée sur un écran 116.

L'ordinateur est conçu ou programmé pour corriger le spectre bi-paramétrique selon un procédé conforme à l'invention.

Les données pour mettre en oeuvre ce procédé peuvent être mémorisées dans l'ordinateur 114 ou dans une mémoire indiquée par la référence 120 sur la figure 7. Lors de la phase d'acquisition, les circuits 110 et 112 établissent toujours les données d'amplitude, de temps de montée et de coordonnées des événements à partir des signaux des éléments de détection.

Un spectre tel que celui de la figure 6 peut être obtenu par le traitement décrit ci-dessus. Il peut être affiché à l'écran 116 au cours d'une acquisition. Un dispositif et un procédé selon l'invention peuvent être utilisés dans le cadre d'examens médicaux pratiqués en médecine nucléaire, tels que décrits dans l'introduction à la demande de brevet FR - 2 790 560, ou d'observations en astrophysique, dans le domaine nucléaire (observation par exemple de flux de déchets radioactifs), dans le domaine du contrôle non destructif.

Dans tout ce qui précède, l'invention a été décrite avec l'exemple de spectres bi-paramétriques (temps - amplitude). La profondeur d'interaction des photon dans le milieu semi-conducteur peut être approchée par la mesure du temps de montée, ou également par la mesure de rapport d'amplitudes anode par cathode. L'invention s'applique également à tout autre exemple de spectre bi-paramétrique.

## Revendications

1. Procédé de traitement d'un spectre bi-paramétrique relatif à une distribution d'un nombre de photons n variant suivant différents canaux d'un premier paramètre et différents canaux d'un deuxième paramètre, le spectre étant obtenu à l'aide d'un détecteur (34) à semi-conducteur, le deuxième paramètre étant l'amplitude d'un signal issu du détecteur,

   le procédé étant adapté pour corriger des défauts de collection des porteurs de charge dans le semi-conducteur créés par une interaction de photons X ou gamma avec le semi-conducteur et comportant des étapes de :

   - sélection du premier paramètre de profil du spectre, et d'une fonction initiale de correction ($C_0$),
   - correction d'un premier profil (Do) au moins par une multiplication par la fonction de correction initiale, puis
   - pour tout profil sélectionné ($D_k$) selon ce premier paramètre, effectuer une opération de correction au moins par multiplication de ce profil sélectionné par une fonction de correction ($C_k$) égale à la somme d'au moins une partie des profils déjà corrigés.

2. Procédé selon la revendication 1, dans lequel le spectre bi-paramétrique est un spectre (temps de montée - amplitude), le premier paramètre étant le temps de montée du spectre.

3. Procédé selon la revendication 2, les profils étant sélectionnés selon un ordre décroissant des temps de montée.

4. Procédé selon la revendication 2, comportant en outre l'étape de :

   - classement de tous les profils du spectre selon un critère de qualité de résolution, les profils étant sélectionnés selon un ordre décroissant de qualité de résolution.

5. Procédé selon l'une des revendications 1 à 4, dans lequel le spectre bi-paramétrique est un spectre préalablement corrigé par homothétie.

6. Procédé selon l'une des revendications 1 à 5, dans lequel la fonction initiale de correction (Co) est une distribution uniforme.

7. Procédé selon l'une des revendications 1 à 6, dans lequel ladite opération de correction comprend en outre une étape de normalisation de ladite fonction de correction consistant en une division par une intégrale de ladite fonction de correction.

8. Procédé selon l'une des revendications 1 à 6, dans lequel ladite opération de correction comprend en outre une étape de normalisation consistant en une autre multiplication par un rapport d'une intégrale dudit profil sélectionné sur une autre intégrale dudit profil sélectionné et multiplié par ladite fonction de correction.

9. Procédé selon l'une des revendications 2 à 6, dans lequel ledit spectre est représentatif d'une distribution d'un nombre de photons variant suivant différents canaux en temps de montée et différents canaux en amplitude, ladite distribution étant déterminée à une incertitude de mesure près, ladite opération de correction comprenant en outre une étape de normalisation comportant :

- une division dudit profil sélectionné par une convolution de ladite fonction de correction et de ladite fonction d'incertitude,
- une étape de redistribution canal d'amplitude par canal d'amplitude de la répartition du nombre de photons dans ledit profil sélectionné à l'aide d'une fonction dite d'incertitude dépendante de ladite incertitude de mesure.

10. Procédé selon la revendication 9, ladite fonction étant une fonction de type gaussienne dont l'écart type dépend de ladite incertitude.

11. Dispositif de traitement d'un spectre bi-paramétrique relatif à une distribution d'un nombre de photons n variant suivant différents canaux d'un premier paramètre et différents canaux d'un deuxième paramètre du signal, le spectre étant obtenu à l'aide d'un détecteur à semi-conducteur, le deuxième paramètre étant l'amplitude d'un signal issu du détecteur, le dispositif étant adapté à traiter des défauts de collection des porteurs de charge dans le semi-conducteur créés par une interaction de photons X ou gamma avec le semi-conducteur, le dispositif comportant :

- des moyens adaptés pour sélectionner un paramètre de profil du spectre, et une fonction initiale de correction,
- des moyens adaptés pour, pour tout profil sélectionné selon ce paramètre, effectuer une opération de correction par multiplication de ce profil sélectionné par une fonction de correction, égale à la somme d'au moins une partie des profils déjà corrigés et normalisés.

12. Dispositif selon la revendication 11, comportant en outre :

- des moyens adaptées pour classer tous les profils du spectre selon un critère de qualité de résolution,
- des moyens adaptés pour sélectionner les profils du spectre selon un ordre croissant ou décroissant de qualité de résolution.

13. Dispositif selon l'une des revendications 11 ou 12, comportant en outre des moyens adaptés pour corriger le spectre par homothétie.

14. Dispositif d'imagerie médicale comportant :

- un détecteur (34) ou une matrice de détecteurs à semi-conducteur,
- des moyens d'acquisition d'un spectre bi-paramétrique,
- un dispositif de traitement (114) du spectre bi-paramétrique selon l'une des revendications 11 à 13,
- des moyens d'affichage (116) d'informations relatives au traitement du spectre bi-paramétrique.

15. Dispositif de traitement d'un spectre bi-paramétrique comportant :

- des moyens programmés pour mettre en oeuvre un procédé selon l'une des revendications 1 à 10.

**Patentansprüche**

1. Verfahren zum Verarbeiten eines bi-parametrischen Spektrums bezogen auf eine Verteilung einer Anzahl von Photonen n, die nach verschiedenen Kanälen eines ersten Parameters und verschiedenen Kanälen eines zweiten Parameters variieren, wobei das Spektrum mit Hilfe eines Detektors (34) mit Halbleiter erhalten wird, wobei der zweite Parameter die Amplitude eines von dem Detektor ausgehenden Signals ist,
wobei das Verfahren dazu geeignet ist, Fehler bei der Sammlung von Ladungsträgern in dem Halbleiter zu korrigieren, die durch eine Wechselwirkung von Röntgen- bzw. Gammaphotonen mit dem Halbleiter hervorgerufen werden, und folgende Schritte umfasst:

- Wählen des ersten Profilparameters des Spektrums und einer anfänglichen Korrekturfunktion (Co),

- Korrektur eines ersten Profils ($D_0$) zumindest durch eine Multiplikation mit der anfänglichen Korrekturfunktion, dann
- für jegliches nach diesem ersten Parameter gewählte Profil ($D_k$) Durchführen einer Korrekturoperation zumindest durch Multiplikation dieses gewählten Profils mit einer Korrekturfunktion ($C_k$), die gleich der Summe zumindest eines Teils der bereits korrigierten Profile ist.

2. Verfahren nach Anspruch 1, wobei das bi-parametrische Spektrum ein Spektrum (Anstiegszeit - Amplitude) ist, wobei der erste Parameter die Anstiegszeit des Spektrums ist.

3. Verfahren nach Anspruch 2, wobei die Profile nach einer abnehmenden Reihenfolge der Anstiegszeiten gewählt werden.

4. Verfahren nach Anspruch 2, ferner umfassend den Schritt des

   - Einordnens aller Profile des Spektrums nach einem Auflösungsqualitätskriterium, wobei die Profile nach einer abnehmenden Reihenfolge der Auflösungsqualität gewählt werden.

5. Verfahren nach einem der Ansprüche 1 bis 4, wobei das bi-parametrische Spektrum ein zuvor durch Homothetie korrigiertes Spektrum ist.

6. Verfahren nach einem der Ansprüche 1 bis 5, wobei die anfängliche Korrekturfunktion (Co) eine einheitliche Verteilung ist.

7. Verfahren nach einem der Ansprüche 1 bis 6, wobei die Korrekturoperation ferner einen Schritt der Normalisierung dieser Korrekturfunktion umfasst, der aus einer Division durch ein Integral der Korrekturfunktion besteht.

8. Verfahren nach einem der Ansprüche 1 bis 6, wobei die Korrekturoperation ferner einen Schritt der Normalisierung umfasst, der aus einer weiteren Multiplikation durch ein Verhältnis eines Integrals des gewählten Profils zu einem weiteren Integral des gewählten und mit der Korrekturfunktion multiplizierten Profils besteht.

9. Verfahren nach einem der Ansprüche 2 bis 6, wobei das Spektrum repräsentativ ist für eine Verteilung einer Anzahl von Photonen, die nach verschiedenen Kanälen in Anstiegszeit und verschiedenen Kanälen in Amplitude variieren, wobei die Verteilung auf eine Messunsicherheit genau bestimmt wird, wobei die Korrekturoperation ferner einen Schritt der Normalisierung umfasst, umfassend:

   - eine Division des gewählten Profils durch eine Faltung der Korrekturfunktion und der Unsicherheitsfunktion,
   - einen Schritt der Umverteilung Amplitudenkanal für Amplitudenkanal von der Verteilung der Anzahl an Photonen in dem gewählten Profil, und zwar mit Hilfe einer sogenannten Unsicherheitsfunktion, die von der Messunsicherheit abhängt.

10. Verfahren nach Anspruch 9, wobei die Funktion eine Funktion vom Typ Gauß-Funktion ist, deren Standardabweichung von der genannten Unsicherheit abhängt.

11. Vorrichtung zum Verarbeiten eines bi-parametrischen Spektrums bezogen auf eine Verteilung einer Anzahl von Photonen n, die nach verschiedenen Kanälen eines ersten Parameters und verschiedenen Kanälen eines zweiten Parameters des Signals variieren, wobei das Spektrum mit Hilfe eines Detektors mit Halbleiter erhalten wird, wobei der zweite Parameter die Amplitude eines von dem Detektor ausgehenden Signals ist, wobei die Vorrichtung dazu geeignet ist, Fehler bei der Sammlung von Ladungsträgern in dem Halbleiter zu verarbeiten, die durch eine Wechselwirkung von Röntgen- bzw. Gammaphotonen mit dem Halbleiter hervorgerufen werden, wobei die Vorrichtung enthält:

   - Mittel, die zum Wählen eines Profilparameters des Spektrums und einer anfänglichen Korrekturfunktion geeignet sind,
   - Mittel, um für jegliches nach diesem ersten Parameter gewählte Profil eine Korrekturoperation durch Multiplikation dieses gewählten Profils mit einer Korrekturfunktion durchzuführen, die gleich der Summe zumindest eines Teils der bereits korrigierten und normalisierten Profile ist.

12. Vorrichtung nach Anspruch 11, ferner enthaltend:

- Mittel, die dazu geeignet sind, alle Profile des Spektrums nach einem Auflösungsqualitätskriterium einzuordnen,
- Mittel, die dazu geeignet sind, die Profile des Spektrums nach einer zunehmenden bzw. abnehmenden Reihenfolge der Auflösungsqualität zu wählen.

13. Vorrichtung nach einem der Ansprüche 11 oder 12, ferner enthaltend Mittel, die dazu geeignet sind, das Spektrum durch Homothetie zu korrigieren.

14. Vorrichtung zur medizinischen Bildgebung, enthaltend:

- einen Detektor (34) oder eine Matrix aus Detektoren mit Halbleiter,
- Erfassungsmittel zum Erfassen eines bi-parametrischen Spektrums,
- eine Verarbeitungsvorrichtung (114) zum Verarbeiten des bi-parametrischen Spektrums nach einem der Ansprüche 11 bis 13,
- Anzeigemittel (116) zum Anzeigen von Informationen bezüglich der Verarbeitung des bi-parametrischen Spektrums.

15. Vorrichtung zum Verarbeiten eines bi-parametrischen Spektrums, enthaltend:

- Mittel, die zum Durchführen eines Verfahrens nach einem der Ansprüche 1 bis 10 programmiert sind.

**Claims**

1. A method for processing a two-parameter spectrum relating to a distribution of a number of photons n varying according to different channels of a first parameter and different channels of a second parameter, the spectrum being obtained by means of a semi-conductor detector (34), the second parameter being the amplitude of a signal from the detector comprising, the method being adapted to correct charge carrier collection defects in the semiconductor created by a X or gamma photon interaction with the semiconductor, and comprising the steps of:

- selecting the first profile parameter for the spectrum, and an initial correction function (Co),
- correcting of a first profile (Do) by at least multiplying by an initial correction function, then,
- for any profile selected (Dk) according to this first parameter, the carrying out of at least a correction operation by multiplying this selected profile by a correction function (Ck), equal to the sum of at least a portion of the already corrected profiles.

2. Method of claim 1, in which the two-parameter spectrum is a (rise time - amplitude) spectrum, the first parameter being the rise time of the spectrum.

3. Method of claim 2, the profiles being selected according to a decreasing order of the rise times.

4. Method of claim 2, further comprising the step of:

- classifying all of the profiles of the spectrum according to a resolution quality criterion, the profiles being selected according to a decreasing order of resolution quality.

5. Method as claimed in one of claims 1 to 4, in which the two-parameter spectrum is a spectrum that has been previously corrected by homothety.

6. Method as claimed in one of claims 1 to 5, in which the initial correction function (Co) is a uniform distribution.

7. Method as claimed in one of claims 1 to 6, in which said correction operation further includes a normalisation step for said correction function consisting of division by an integral of said correction function.

8. Method as claimed in one of claims 1 to 6, in which said correction operation further includes a normalisation step consisting of another multiplication by a ratio of an integral of said selected profile to another integral of the selected profile multiplied by said correction function.

9. Method as claimed in one of claims 2 to 6, in which said spectrum is representative of a distribution of a number of photons varying across various rise-time channels and various amplitude channels, said distribution being determined with a close uncertainty of measurement, said correction operation further including a localised normalisation step comprising:

- a division of said selected profile by a convolution of said correction function and said uncertainty function,
- a step for amplitude channel redistribution by amplitude channel of the distribution of the number of photons in said selected profile, using an uncertainty function dependent on said uncertainty of measurement.

10. Method of claim 9, said function being a Gaussian-type function whose standard deviation depends on said uncertainty.

11. Device for processing a two-parameter spectrum relating to a distribution of a number of photons n varying according to different channels of a first parameter and different channels of a second parameter, the spectrum being obtained by means of a semi-conductor detector (34), the second parameter being the amplitude of a signal from the detector, the device being adapted to process charge carrier collection defects in the semiconductor created by a X or gamma photon interaction with the semiconductor, the device comprising:

- means adapted to select a profile parameter for the spectrum, and an initial correction function,
- means adapted to, for any profile selected according to this parameter, means for performing a correction operation by multiplying this selected profile by a correction function equal to the sum of at least a portion of the already corrected and normalised profiles.

12. Device according to claim 11, further comprising:

- means adapted to classify all the profiles of the spectrum according to a resolution quality criterion,
- means adapted to select the profiles of the spectrum according to an increasing or decreasing order of resolution quality.

13. Device as claimed in one of claims 11 or 12, further comprising means for correcting the spectrum by homothety.

14. Medical imaging device comprising:

- a semiconductor detector or matrix of detectors,
- means for acquiring a two-parameter spectrum,
- a device for processing a two-parameter spectrum as claimed in one of claims 11 to 13,
- means for displaying information relating to the processing of the two-parameter spectrum.

15. Device for processing a two-parameter spectrum comprising:

- programmed means for implementing a method as claimed in one of claims 1 to 10.

FIG. 1

FIG. 2

FIG. 3

FIG. 5

FIG. 6

**FIG. 4**

ACQUISITION D'UN
SPECTRE BIPARAMETRIQUE — S1

SELECTION D'UN PARAMETRE
DE PROFIL DU SPECTRE — S2

SELECTION D'UNE FONCTION DE
DE CORRECTION INITIALISEE
A UNE DISTRIBUTION $C_0$ — S3

SELECTION D'UN PREMIER
PROFIL $D_0$ DU SPECTRE — S4

NORMALISATION    $D'_0 \rightarrow \underline{D}'_0$ — S5

CORRECTIONDU PROFIL $D_0$ EN UN PROFIL $D'_0$
TEL QUE $D'_0 = D_0 \times C_0$ — S6

MODIFICATION DE LA FONCTION DE CORRECTION
$C_1 = C_0 + \underline{D}'_0$ — S7

SELECTION D'UN SECOND
PROFIL $D_1$ DU SPECTRE — S8

CORRECTION DU PROFIL D EN UN PROFIL
$D'_1$ TEL QUE    $D'_1 = D_1 \times C_1$ — S9

NORMALISATION    $D'_1 \rightarrow \underline{D}'_1$ — S10

OBTENTION D'UN SPECTRE BIPARAMETRIQUE
CORRIGE — SN

# FIG. 7

# FIG. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2738919
- FR 2738693
- FR 2790560